# EUROPEAN PATENT SPECIFICATION

(11) **EP 4 124 957 B1**
(45) Date of publication and mention of the grant of the patent: **21.01.2026**
(21) Application number: 22179808.5
(22) Date of filing: 20.06.2022
(51) Int. Cl.: G06F 11/07, G06F 11/30

(54) **CORE BOARD, SERVER, FAULT REPAIRING METHOD AND APPARATUS, AND STORAGE MEDIUM**
KERNPLATINE, SERVER, FEHLERREPARATURVERFAHREN UND -GERÄT UND SPEICHERMEDIUM
CARTON POUR TUBES, SERVEUR, PROCÉDÉ ET APPAREIL DE RÉPARATION DE DÉFAUTS, ET SUPPORT DE STOCKAGE

(30) Priority: 08.09.2021 CN 202111050222
(43) Date of publication of application: 01.02.2023
(73) Proprietor: BEIJING BAIDU NETCOM SCIENCE TECHNOLOGY CO., LTD., Beijing 100085 (CN)
(72) Inventor: Jiang, Junhua, Beijing, 100085 (CN); Wu, Zhiyong, Beijing, 100085 (CN); Zhou, Guang, Beijing, 100085 (CN)
(74) Representative: Nederlandsch Octrooibureau

(56) References cited:
- CN-A- 110 727 626
- CN-A- 111 124 749
- CN-A- 112 148 527
- US-A1- 2016 239 370

## Description

### TECHNICAL FIELD

The present disclosure relates to the technical field of computers, particularly to the field of cloud services, and more particularly relates to a core board, a server, a fault repairing method and apparatus, and a storage medium.

### BACKGROUND

When a core board of a server becomes bricked (faults such as bootloader damage) and cannot be powered on, repairing may be performed by recovery in a 9008 forced downloading mode via a USB interface on a card board of the core board. However, an existing ARM server is different from an ordinary X86 server (a concept of the ARM server is proposed for a traditional X86 server. The X86 server is a high-performance computing device designed and developed using a dedicated server CPU for an X86 structure, and is mainly for PC terminal applications. The ARM server is a high-performance computing device designed and developed using a dedicated server CPU for an ARM structure, and is mainly for mobile terminal applications). A considerable number of core board cards are built-in the existing ARM server, and are installed in a server chassis. Moreover, after being arranged behind an IDC (Internet data center) computer room, the core board within the chassis cannot be directly recovered by forced downloading directly via the computer USB. When the core board is faulty, it will be necessary to perform factory reset on the core board, and the problem cannot be solved quickly.
CN patent application CN 110727626 A discloses a method for realizing forced downloading of a terminal, where a logic gate circuit is arranged on a mainboard of the terminal, so that the terminal is short-circuited, and meanwhile, a hardware trap signal is used for changing a downloading port signal; the terminal is connected with a computer through a USB. Meanwhile, a power key and a volume key of the terminal are pressed down, the terminal forcedly enters the download port.
CN patent application CN 111124749 A discloses an automatic repairing method and a system for a BMC system of a tight coupling high-performance computer system. The method is characterized by comprising the steps that when a management system monitors that BMC starting fails, BMC starting is controlled to be restarted, a BMC starting file needed by starting is obtained from a network file service system, and the BMC starting file is loaded into a memory of the network file service system to run.
US patent application US 2016/239370 A1 discloses a rack comprising a control module and a plurality of nodes. The control module comprises a rack management controller (RMC), and each of the plurality of nodes comprises a baseboard management controller (BMC). The RMC communicates with the BMCs respectively through a plurality of default communication channels, and the RMC controls the nodes and transmits necessary data thereto through the BMCs. When losing response signal from one of the BMCs, the RMC resends same signal to the non-responded BMC. If a resend threshold is achieved, the RMC sends a control signal to a reset pin of the non-responded BMC directly through a GPIO channel to force the non-responded BMC to reset.
CN patent application CN 112148527 A discloses a server power-off method, device and system. The method comprises the steps that after a cloud platform detects a server fault, an AC power-off instruction is issued to a fault server through a baseboard management controller network port, and the AC power-off instruction comprises timing time and a server restart instruction; the server writes timing time into an automatic switch device which is connected with a mainboard and a power supply, independently supplies power and has a time delay function through a baseboard management controller, and the automatic switch device immediately changes from a normally closed state to an open state after receiving an AC power-off instruction so as to disconnect a power supply link of the server mainboard. And after the timing is finished, the open state is changed into the normally closed state so as to enable the mainboard power supply link to recover power supply. After the server detects that the mainboard power supply link recovers power supply, the server automatically powers on the mainboard and restarts the system according to the server restart instruction.

### SUMMARY

The present disclosure provides a core board, a server, a fault repairing method and apparatus, and a storage medium. The invention is set out in the appended set of claims.

According to the technology of the present disclosure, fault repairing of the core board can be quickly achieved by modifying hardware of the server.

It should be understood that contents described in the SUMMARY are neither intended to identify key or important features of embodiments of the present disclosure, nor intended to limit the scope of the present disclosure. Other features of the present disclosure will become readily understood in conjunction with the following description.

### BRIEF DESCRIPTION OF THE DRAWINGS

The accompanying drawings are used for better understanding of the present solution, and do not impose any limitation on the present disclosure. In the accompanying drawings:
Fig. 1 is a diagram of an exemplary system architecture in which an embodiment of the present disclosure may be implemented;
Fig. 2 is a schematic structural diagram of a core board according to an embodiment of the present disclosure;
Fig. 3 is a schematic structural diagram of the core board according to another embodiment of the present disclosure;
Fig. 4 is a schematic structural diagram of a server according to an embodiment of the present disclosure;
Fig. 5 is a schematic structural diagram of the server according to another embodiment of the present disclosure;
Fig. 6 is a schematic structural diagram of the server according to still another embodiment of the present disclosure;
Fig. 7 is a flowchart of a fault repairing method according to an embodiment of the present disclosure;
Fig. 8 is a flowchart of the fault repairing method according to another embodiment of the present disclosure;
Fig. 9 is a schematic structural diagram of a fault repairing apparatus according to an embodiment of the present disclosure;
Fig. 10 is a schematic structural diagram of the fault repairing apparatus according to another embodiment of the present disclosure; and
Fig. 11 is a block diagram of the server configured to implement embodiments of the present disclosure.

### DETAILED DESCRIPTION OF EMBODIMENTS

Example embodiments of the present disclosure are described below with reference to the accompanying drawings, including various details of the embodiments of the present disclosure to contribute to understanding, which should be considered merely as examples. Therefore, those of ordinary skills in the art should realize that various alterations and modifications may be made to the embodiments described here. Similarly, for clearness and conciseness, descriptions of well-known functions and structures are omitted in the following description.

It should be noted that the embodiments in the present disclosure and the features in the embodiments may be mutually combined on a non-conflict basis. The present disclosure will be described in detail below with reference to the accompanying drawings and in combination with the embodiments.

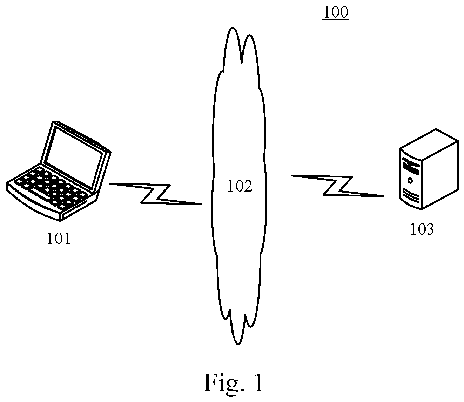

Fig. 1 shows an exemplary system architecture 100 in which a fault repairing method or apparatus of embodiments of the present disclosure may be implemented.

As shown in Fig. 1, the system architecture 100 may include a terminal device 101, a network 102, and a server 103. The network 102 serves as a medium providing a communication link between the terminal device 101 and the server 103. The network 102 may include various types of connections, such as wired or wireless communication links, or optical cables.

A user may interact with the server 103 using the terminal device 101 via the network 102, e.g., to send data for repairing to the server 103. The terminal device 101 may be provided with various communication client applications, such as a flow detection application.

The server 103 may be a server which provides various services, and in which a plurality of core boards and a baseboard manager controller may be installed. The baseboard management controller may interact with the plurality of core boards, and perform, when one of the core boards is faulty, fault repairing on the core board.

It should be noted that the fault repairing method provided in the embodiments of the present disclosure is generally executed by the baseboard manager controller and the core boards in the server 103. Accordingly, the fault repairing apparatus is generally provided in the baseboard manager controller and the core boards in the server 103.

It should be understood that the numbers of terminal devices, networks, and servers in Fig. 1 are merely illustrative. Any number of terminal devices, networks, and servers may be provided based on actual requirements.

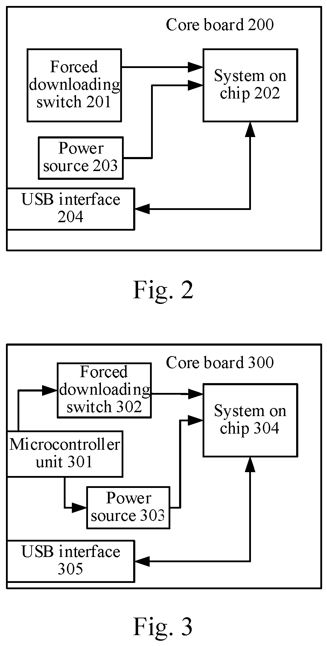

Further referring to Fig. 2, a schematic structural diagram of a core board according to an embodiment of the present disclosure is shown. As shown in Fig. 2, the core board 200 of the present embodiment includes: a forced downloading switch 201, a system on chip (SOC) 202, a power source 203, and a USB interface 204.

The forced downloading switch 201 is communicatively connected to the system on chip 202. Further, the forced downloading switch 201 further receives a forced downloading signal sent from an external device other than the core board 200. After receiving the forced downloading signal, the forced downloading switch 201 changes its own state, by adjusting an electrical signal value to a preset value. The electrical signal here may be a voltage value, or may be a current value. The forced downloading switch 201 may adjust the electrical signal value, for example, by adjusting the electrical signal value from a low level to a high level, or adjusting the electrical signal value from a high-level value to a low-level value.

The system on chip 202 may monitor the electrical signal value of the forced downloading switch 201 in real time in a power-on state. When monitoring that the electrical signal value of the forced downloading switch 201 is the preset value, it may determine that it is currently necessary to forcedly download data for repairing to perform forced fault repairing. Here, the data for repairing may include multi-line codes, and the system on chip 202 may execute the multi-line codes to implement recovery or fault repairing.

The power source 203 is configured to supply power to the system on chip 202. The power source 203 further receives a power control signal sent from an external device other than the core board 200, and perform power control based on the power control signal. The system on chip 202 is in a power-on or a power-off state under the control of the power control signal.

The core board 200 is further provided with the USB interface 204. The USB interface 204 may be communicatively connected to an external device other than the core board 200, to receive the data for repairing sent from the external device. The USB interface sends the data for repairing to the system on chip 202 to implement forced downloading of the data for repairing.

The power source 203 is further configured to first power off, and then power on the system on chip 202 under the control of the power control signal. After being power-on, the system on chip 202 enters a repairing mode, i.e., execute a program or codes in the data for repairing, to implement fault repairing.

The core board provided in the above embodiments of the present disclosure receives the data for repairing from the external device via the USB interface, and control the system on chip via the forced downloading switch and the power source, such that the system on chip can perform fault repairing under the above control using the data for repairing, thereby improving a fault repairing efficiency of the core board.

Further referring to Fig. 3, a schematic structural diagram of the core board according to another embodiment of the present disclosure is shown. As shown in Fig. 3, the core board 300 of the present embodiment includes: a microcontroller unit (MCU) 301, a forced downloading switch 302, a power source 303, a system on chip 304, and a USB interface 305.

The microcontroller unit 301 is connected to the forced downloading switch 302 and the power source 303. The microcontroller unit 301 may interact with an external device other than the core board 300, for example, to receive a fault repairing instruction sent by the external device. When receiving the fault repairing instruction, the microcontroller unit 301 sends a forced downloading signal to the forced downloading switch 302, and sends a power control signal to the power source 303. When receiving the forced downloading signal, the forced downloading switch 302 adjusts its own state. For example, it adjusts an electrical signal value, e.g., to set the electrical signal value as a preset value. After receiving the power control signal, the power source 303 perform power controls on the system on chip 304.

The system on chip 304 is further communicatively connected to the USB interface 305. When monitoring that the electrical signal value of the forced downloading switch 302 is the preset value, the system on chip 304 performs fault repairing using data for repairing received from outside via the USB interface 305.

The USB interface 305 may interact with the external device other than the core board 300, for example, to receive the data for repairing sent by the external device, and send the data for repairing to the system on chip 304.

The power source 303 is further configured to first power off, and then power on the system on chip 304 under the control of the power control signal. After being power-on, the system on chip 304 enters a repairing mode, i.e., execute a program or codes in the data for repairing, to implement fault repairing.

The core board provided in the above embodiments of the present disclosure is provided with a MCU in the core board, and controls each component in the core board via the MCU, thereby implementing fault repairing of the core board. Compared with the core board shown in Fig. 2, the core board of the present embodiment has fewer connection wires with the external device, thus requiring less wiring space, facilitating heat dissipation of the server, and reducing a server size.

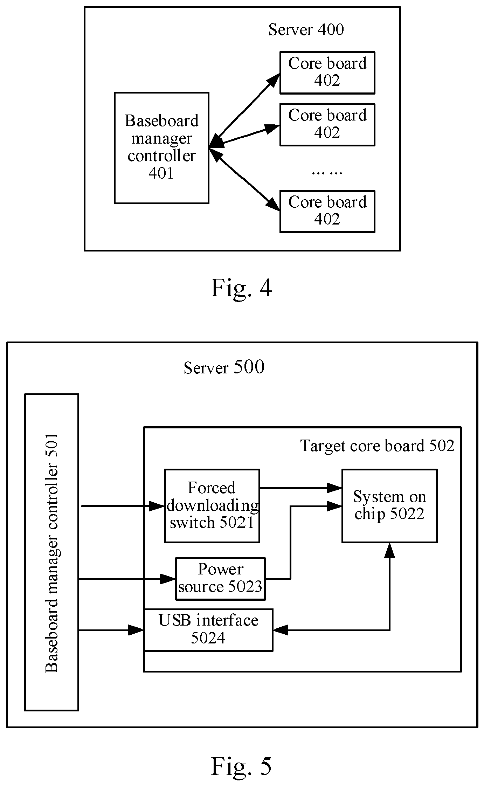

Referring to Fig. 4, a schematic structural diagram of a server according to an embodiment of the present disclosure is shown. As shown in Fig. 4, the server 400 of the present embodiment includes a baseboard manager controller (BCM) 401 and at least one core board 402. The core board here may be the core board shown in Fig. 2, or may be the core board shown in Fig. 3.

The BCM 401 receives core board fault information sent from outside. The "outside" here may be a device other than the server 400, e.g., a terminal that manages servers. The terminal may monitor data of the core board in each server, and may consider, if determining that there is no output from a core board or determining that it fails to connect to a core board, that the core board is faulty. The core board fault information may be generated based on a position of the faulty core board, and output the core board fault information to the BCM 401. After receiving the core board fault information, the BCM 401 may analyze the core board fault information to determine the position of the faulty core board. Here, the faulty core board is referred to as a target core board.

The target core board 402 may interact with the BCM 401, for example, to receive a forced downloading signal sent from the BCM 401. Further, it may determine, after receiving the forced downloading signal, that fault repairing is currently required. In this case, the target core board 402 may receive data for repairing from the BCM 401 to perform fault repairing. Here, the fault repairing may be recovery of the target core board 402.

The server provided in the above embodiments of the present disclosure can implement the fault repairing of the core board by installing the BCM therein, without disassembling the core board from the server, thereby improving the fault repairing efficiency of the core board.

In some optional implementations of the present embodiment, the BCM 401 may acquire the data for repairing from an external device. Specifically, the BCM 401 may acquire the data for repairing from a terminal device that monitors and manages the server 400.

Further referring to Fig. 5, a schematic structural diagram of the server according to the present disclosure is shown. As shown in Fig. 5, the server 500 of the present embodiment may include a BCM 501 and a target core board 502. The target core board 502 includes a forced downloading switch 5021, a system on chip 5022, a power source 5023, and a USB interface 5024.

The forced downloading switch 5021 is communicatively connected to the system on chip 5022. Further, the forced downloading switch 5021 further receives a forced downloading signal sent from the BCM 501. After receiving the forced downloading signal, the forced downloading switch 5021 changes its own state, for example, by adjusting an electrical signal value thereof to a preset value. The electrical signal here may be a voltage value, or may be a current value. The forced downloading switch may adjust the electrical signal value. For example, it may adjust the electrical signal value from a low level to a high level, or adjust the electrical signal value from a high-level value to a low-level value.

The system on chip 5022 monitors the electrical signal value of the forced downloading switch 5021 in real time in a power-on state. Further, it may determine, when monitoring that the electrical signal value of the forced downloading switch 5021 is the preset value, that it is currently necessary to forcedly download data for repairing to perform forced fault repairing. Here, the data for repairing may include multi-line codes, and the system on chip 5022 may execute the multi-line codes to implement recovery or fault repairing.

The power source 5023 is configured to supply power to the system on chip 5022. The power source 5023 further receives a power control signal sent by the BCM 501, and perform power control based on the power control signal. The system on chip 5022 is in a power-on or power-off state under the control of the power control signal.

The target core board 502 may be further provided with the USB interface 5024. The USB interface 5024 may be communicatively connected to the BCM 501, to receive the data for repairing sent from an external device. The USB interface 5024 may send the data for repairing to the system on chip 5022 to implement forced downloading of the data for repairing.

In the present embodiment, the BCM 501 may be connected to the forced downloading switch 5021 via a first connection wire, connected to the power source 5023 via a second connection wire, and connected to the USB interface 5024 via a third connection wire.

The server provided in the above embodiments of the present disclosure can implement the fault repairing of the core board using the BCM, thereby improving the fault repairing efficiency.

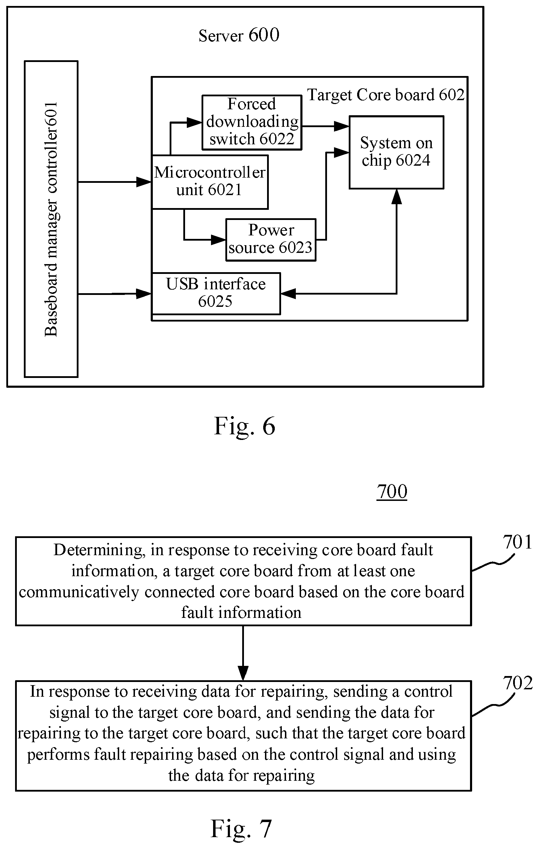

Referring to Fig. 6, a schematic structural diagram of the server according to the present disclosure is shown. As shown in Fig. 6, the server 600 of the present embodiment may include a BCM 601 and a target core board 602. The target core board 602 includes: a microcontroller unit 6021, a forced downloading switch 6022, a power source 6023, a system on chip 6024, and a USB interface 6025.

The microcontroller unit 6021 is connected to the forced downloading switch 6022 and the power source 6023. The microcontroller unit 6021 interacts with the BCM 601, for example, to receive a fault repairing instruction sent by the BCM 601. When receiving the forced repairing instruction, the microcontroller unit 6021 sends a forced downloading signal to the forced downloading switch 6022, and sends a power control signal to the power source 6023. When receiving the forced downloading signal, the forced downloading switch 6022 adjusts its own state. For example, it may adjust an electrical signal value thereof, e.g., set the electrical signal value to be a preset value. After receiving the power control signal, the power source 6023 performs power control on the system on chip 6024.

The system on chip 6024 is further communicatively connected to the USB interface 6025. When monitoring that the electrical signal value of the forced downloading switch 6022 is the preset value, the system on chip 6024 performs fault repairing using data for repairing received from outside via the USB interface 6025.

The USB interface 6025 may interact with the BCM 601, for example, to receive the data for repairing sent from an external device, and send the data for repairing to the system on chip 6024.

In the present embodiment, the BCM 601 may be connected to the microcontroller unit 6021 via a fourth connection wire, and connected to the power source 6023 via a fifth connection wire.

The power source 6023 first powers off, and then re-powers the system on chip 6022 when receiving the power control signal.

Further referring to Fig. 7, a process 700 of a fault repairing method according to an embodiment of the present disclosure is shown. As show in Fig. 7, the method of the present embodiment may be applied to a baseboard manager controller, and may include the following steps.

Step 701: determining, in response to receiving core board fault information, a target core board from at least one communicatively connected core board based on the core board fault information.

In the present embodiment, the baseboard manager controller may receive the core board fault information, and analyze, after receiving the core board fault information, the core board fault information, to determine the target core board from the at least one communicatively connected core board. Specifically, the core board fault information may include position information of a core board, and the position information here may refer to a position of the core board in a server.

Step 702: in response to receiving data for repairing, sending a control signal to the target core board, and sending the data for repairing to the target core board, such that the target core board performs fault repairing based on the control signal and using the data for repairing.

After determining the target core board, the baseboard manager controller may further receive the data for repairing from outside, send the control signal to the target core board, and send the data for repairing to the target core board. After receiving the control signal and the data for repairing, the target core board may perform fault repairing using the data for repairing.

In some optional implementations of the present embodiment, the target core board may include a forced downloading switch, a USB interface, a power source, and a system on chip. The control signal may include a forced downloading signal and a power control signal. The baseboard manager controller may implement the sending of the control signal and the data for repairing through the following steps that are not shown in Fig. 7: sending the forced downloading signal to the forced downloading switch via a first connection wire, sending the data for repairing to the target core board via a second connection wire and the USB interface, and sending the power control signal to the power source via a third connection wire.

In some optional implementations of the present embodiment, the target core board may include a microcontroller unit, the forced downloading switch, the power source, the USB interface, and the system on chip. The control signal includes a forced repairing instruction. The baseboard manager controller may implement the sending of the control signal and the data for repairing through the following steps that are not shown in Fig. 7: sending the forced repairing instruction to the microcontroller unit via a fourth connection wire, such that the microcontroller unit sends, after receiving the forced repairing instruction, a forced downloading signal to the forced downloading switch and a power control signal to the power source; and sending the data for repairing to the USB interface via a fifth connection wire.

The power source may first power off, and then re-power the system on chip when the control signal is sent to the power source.

The fault repairing method provided in the above embodiments of the present disclosure can perform the fault repairing of the core board using the BCM, thereby improving the fault repairing efficiency.

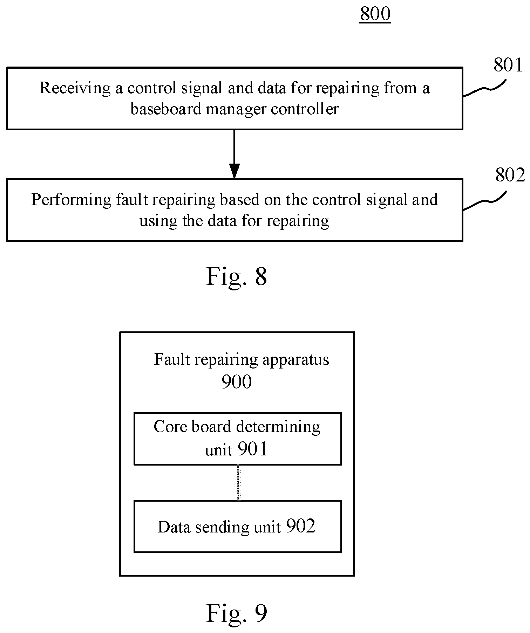

Further referring to Fig. 8, a process 800 of the fault repairing method according to another embodiment of the present disclosure is shown. As show in Fig. 8, the method of the present embodiment is applied to a core board, and may include the following steps.

Step 801: receiving a control signal and data for repairing from a baseboard manager controller.

Step 802: performing fault repairing based on the control signal and using the data for repairing.

In the present implementation, the core board may receive the control signal and the data for repairing from the baseboard manager controller, and perform fault repairing based on the control signal and using the data for repairing.

In some optional implementations of the present embodiment, the core board includes a forced downloading switch, a USB interface, a power source, and a system on chip. The control signal includes a forced downloading signal and a power control signal. The core board may receive data through the following steps: receiving the forced downloading signal for the forced downloading switch from the baseboard manager controller via a first connection wire; receiving the data for repairing from the baseboard manager controller via a second connection wire and the USB interface; and receiving the power control signal for the power source from the baseboard manager controller via a third connection wire.

Accordingly, the core board may perform fault repairing through the following steps: controlling, in response to receiving the forced downloading signal, the system on chip to perform fault repairing under the control of the power control signal using the data for repairing.

In the present implementation, the core board may acquire the forced downloading signal via the first connection wire, acquire the data for repairing via the second connection wire, and acquire the power control signal via the third connection wire. After receiving the forced downloading signal, the core board may determine that fault repairing is currently required, and then control the system on chip to perform fault repairing under control of the power source using the data for repairing.

In some optional implementations of the present embodiment, the core board includes a microcontroller unit, the forced downloading switch, the power source, the USB interface, and the system on chip. The control signal includes a forced repairing instruction. The core board may receive data through the following steps: receiving the forced repairing instruction from a baseboard manager controller via a fourth connection wire; and receiving the data for repairing from the baseboard manager controller via a fifth connection wire and the USB interface.

Accordingly, the core board may perform fault repairing through the following steps: sending, in response to receiving the forced repairing instruction by the microcontroller unit, the forced downloading signal to the forced downloading switch and the power control signal to the power source; and controlling the system on chip to perform fault repairing under the control of the power control signal using the data for repairing.

In the present implementation, if receiving the forced repairing instruction from the baseboard manager controller via the fourth connection wire, the microcontroller unit sends the forced downloading signal to the forced downloading switch and the power control signal to the power source, and may receive the data for repairing from the baseboard manager controller via the fifth connection wire and the USB interface. Then, the core board may control the system on chip to perform fault repairing under the control of the power control signal using the data for repairing.

The fault repairing method provided in the above embodiments of the present disclosure can quickly perform the fault repairing of the core board.

Further referring to Fig. 9, as an implementation of the method shown in the above figures, an embodiment of the present disclosure provides a fault repairing apparatus. The embodiment of the apparatus corresponds to the embodiment of the method shown in Fig. 7, and the apparatus may be specifically applied to various electronic devices.

As shown in Fig. 9, the fault repairing apparatus 900 of the present embodiment includes: a core board determining unit 901 and a data sending unit 902.

The core board determining unit 901 is configured to determine, in response to receiving core board fault information, a target core board from at least one communicatively connected core board based on the core board fault information.

The data sending unit 902 is configured to in response to receiving data for repairing, send a control signal to the target core board, and send the data for repairing to the target core board, such that the target core board performs fault repairing based on the control signal and using the data for repairing.

In some optional implementations of the present embodiment, the target core board includes a forced downloading switch, a USB interface, a power source, and a system on chip, and the control signal includes a forced downloading signal and a power control signal. The data sending unit 902 is further configured to: send the forced downloading signal to the forced downloading switch via a first connection wire, send the data for repairing to the target core board via a second connection wire and the USB interface; and send the power control signal to the power source via a third connection wire.

In some optional implementations of the present embodiment, the target core board includes a microcontroller unit, the forced downloading switch, the power source, the USB interface, and the system on chip, and the control signal includes a forced repairing instruction. The data sending unit 902 is further configured to: send a forced repairing instruction to the microcontroller unit via a fourth connection wire, such that the microcontroller unit sends, after receiving the forced repairing instruction, the forced downloading signal to the forced downloading switch and the power control signal to the power source; and send the data for repairing to the USB interface via a fifth connection wire.

In some optional implementations of the present embodiment, the data sending unit 902 is further configured to: send the power control signal to the power source, such that the power source powers off, and then re-powers the system on chip.

It should be understood that the disclosed unit 901 to unit 902 in the apparatus 900 for fault repairing correspond to the steps in the method described in Fig. 7 respectively. Therefore, the operations and features described above for the fault repairing method also apply to the apparatus 900 and the units included therein. The description will not be repeated here.

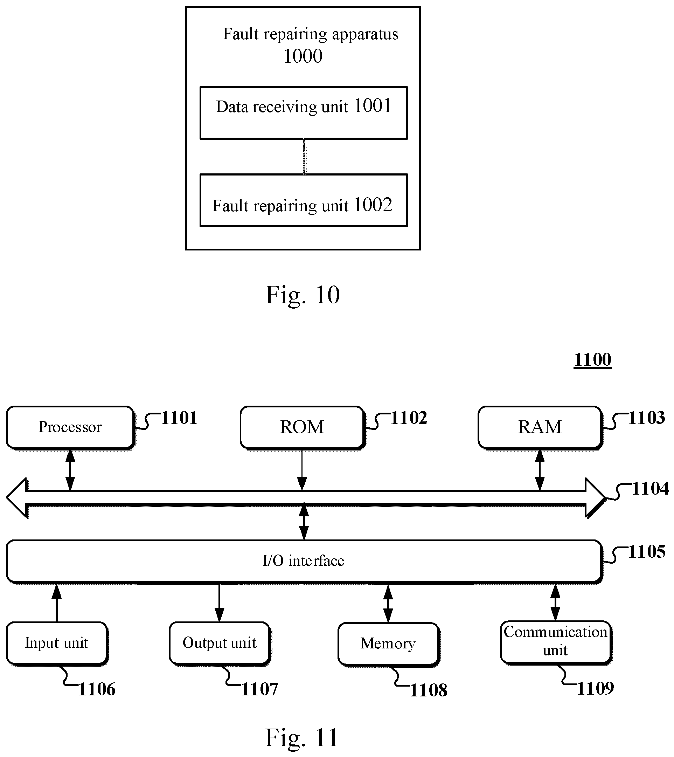

Further referring to Fig. 10, as an implementation of the method shown in the above figures, an embodiment of the present disclosure provides a fault repairing apparatus. The embodiment of the apparatus corresponds to the embodiment of the method shown in Fig. 8, and the apparatus may be specifically applied to various electronic devices.

As shown in Fig. 10, the fault repairing apparatus 1000 of the present embodiment includes: a data receiving unit 1001 and a fault repairing unit 1002.

The data receiving unit 1001 is configured to receive a control signal and data for repairing from a baseboard manager controller.

The fault repairing unit 1002 is configured to perform fault repairing based on the control signal and using the data for repairing.

In some optional implementations of the present embodiment, the core board includes a forced downloading switch, a USB interface, a power source, and a system on chip, and the control signal includes a forced downloading signal and a power control signal. The data receiving unit 1001 is further configured to: receive the forced downloading signal for the forced downloading switch from the baseboard manager controller via a first connection wire; receive the data for repairing from the baseboard manager controller via a second connection wire and the USB interface; and receive the power control signal for the power source from the baseboard manager controller via a third connection wire.

In some optional implementations of the present embodiment, the fault repairing unit 1002 is further configured to: control, in response to receiving the forced downloading signal, the system on chip to perform fault repairing under the control of the power control signal using the data for repairing.

In some optional implementations of the present embodiment, the core board includes a microcontroller unit, the forced downloading switch, the power source, the USB interface, and the system on chip, and the control signal includes a forced repairing instruction. The data receiving unit 1001 is further configured to: receive the forced repairing instruction from a baseboard manager controller via a fourth connection wire; and receive the data for repairing from the baseboard manager controller via a fifth connection wire and the USB interface.

In some optional implementations of the present embodiment, the fault repairing unit 1002 is further configured to: send, in response to receiving the forced repairing instruction by the microcontroller unit, the forced downloading signal to the forced downloading switch and the power control signal to the power source; and control the system on chip to perform fault repairing under the control of the power control signal using the data for repairing.

It should be understood that the disclosed unit 1001 to unit 1002 in the apparatus 1000 for fault repairing correspond to the steps in the method described in Fig. 8 respectively. Therefore, the operations and features described above for the fault repairing method also apply to the apparatus 1000 and the units included therein. The description will not be repeated here.

In the technical solution of the present disclosure, the acquisition, storage, and application of personal information of a user involved are in conformity with relevant laws and regulations, and do not violate public order and good customs.

According to an embodiment of the present disclosure, the present disclosure further provides an electronic device, a readable storage medium, and a computer program product.

Fig. 11 shows a block diagram of an electronic device 1100 configured to implement the fault repairing method according to embodiments of the present disclosure. The electronic device is intended to represent various forms of digital computers, such as a laptop computer, a desktop computer, a workbench, a personal digital assistant, a server, a blade server, a mainframe computer, and other suitable computers. The electronic device may also represent various forms of mobile apparatuses, such as a personal digital assistant, a cellular phone, a smart phone, a wearable device, and other similar computing apparatuses. The components shown herein, the connections and relationships thereof, and the functions thereof are used as examples only, and are not intended to limit implementations of the present disclosure described and/or claimed herein.

As shown in Fig. 11, the electronic device 1100 includes a processor 1101, which may execute various appropriate actions and processes in accordance with a computer program stored in a read-only memory (ROM) 1102 or a computer program loaded into a random-access memory (RAM) 1103 from a memory 1108. The RAM 1103 may further store various programs and data for repairing required by operations of the electronic device 1100. The processor 1101, the ROM 1102, and the RAM 1103 are connected to each other through a bus 1104. An input/output (I/O) interface 1105 is also connected to the bus 1104.

A plurality of components in the electronic device 1100 is connected to the I/O interface 1105, including: an input unit 1106, such as a keyboard and a mouse; an output unit 1107, such as various types of displays and speakers; a memory 1108, such as a magnetic disk and an optical disk; and a communication unit 1109, such as a network card, a modem, and a wireless communication transceiver. The communication unit 1109 allows the electronic device 1100 to exchange information/data for repairing with other devices via a computer network such as the Internet and/or various telecommunication networks.

The processor 1101 may be various general-purpose and/or special-purpose processing components having a processing power and a computing power. Some examples of the processor 1101 include, but are not limited to, a central processing unit (CPU), a graphics processing unit (GPU), various special-purpose artificial intelligence (AI) computing chips, various processors running a machine learning model algorithm, a digital signal processor (DSP), and any appropriate processor, controller, micro-controller, and the like. The processor 1101 executes various methods and processes described above, such as the fault repairing method. For example, in some embodiments, the fault repairing method may be implemented as a computer software program that is tangibly included in a machine-readable storage medium, such as the memory 1108. In some embodiments, some or all of the computer programs may be loaded and/or installed onto the electronic device 1100 via the ROM 1102 and/or the communication unit 1109. When the computer program is loaded into the RAM 1103 and executed by the processor 1101, one or more steps of the fault repairing method described above may be executed. Alternatively, in other embodiments, the processor 1101 may be configured to execute the fault repairing method by any other appropriate approach (e.g., by means of firmware).

Various implementations of the systems and technologies described above herein may be implemented in a digital electronic circuit system, an integrated circuit system, a field programmable gate array (FPGA), an application specific integrated circuit (ASIC), an application specific standard product (ASSP), a system on a chip (SOC), a complex programmable logic device (CPLD), computer hardware, firmware, software, and/or a combination thereof. The various implementations may include: an implementation in one or more computer programs that are executable and/or interpretable on a programmable system including at least one programmable processor, which may be a special-purpose or general-purpose programmable processor, and may receive data for repairing and instructions from, and transmit data for repairing and instructions to, a storage system, at least one input apparatus, and at least one output apparatus.

Program codes for implementing the method of the present disclosure may be compiled using any combination of one or more programming languages. The above program codes may be packaged into a computer program product. The program codes or the computer program product may be provided to a processor or controller of a general-purpose computer, a special-purpose computer, or other programmable apparatuses for processing data for repairing, such that the program codes, when executed by the processor 601, cause the functions/operations specified in the flowcharts and/or block diagrams to be implemented. The program codes may be completely executed on a machine, partially executed on a machine, executed as a separate software package on a machine and partially executed on a remote machine, or completely executed on a remote machine or server.

In the context of the present disclosure, the machine-readable storage medium may be a tangible medium which may contain or store a program for use by, or used in combination with, an instruction execution system, apparatus or device. The machine-readable storage medium may be a machine-readable signal storage medium or a machine-readable storage medium. The computer readable storage medium may include, but is not limited to, electronic, magnetic, optical, electromagnetic, infrared, or semiconductor systems, apparatuses, or devices, or any appropriate combination of the above. A more specific example of the machine-readable storage medium will include an electrical connection based on one or more pieces of wire, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical memory device, a magnetic memory device, or any appropriate combination of the above.

To provide interaction with a user, the systems and technologies described herein may be implemented on a computer that is provided with: a display apparatus (e.g., a CRT (cathode ray tube) or a LCD (liquid crystal display) monitor) configured to display information to the user; and a keyboard and a pointing apparatus (e.g., a mouse or a trackball) by which the user can provide an input to the computer. Other kinds of apparatuses may also be configured to provide interaction with the user. For example, feedback provided to the user may be any form of sensory feedback (e.g., visual feedback, auditory feedback, or haptic feedback); and an input may be received from the user in any form (including an acoustic input, a voice input, or a tactile input).

The systems and technologies described herein may be implemented in a computing system (e.g., as a server for data for repairing) that includes a back-end component, or a computing system (e.g., an application server) that includes a middleware component, or a computing system (e.g., a user computer with a graphical user interface or a web browser through which the user can interact with an implementation of the systems and technologies described herein) that includes a front-end component, or a computing system that includes any combination of such a back-end component, such a middleware component, or such a front-end component. The components of the system may be interconnected by digital communication (e.g., a communication network) for data for repairing in any form or medium. Examples of the communication network include: a local area network (LAN), a wide area network (WAN), and the Internet.

The computer system may include a client and a server. The client and the server are generally remote from each other, and usually interact via a communication network. The relationship between the client and the server arises by virtue of computer programs that run on corresponding computers and have a client-server relationship with each other. The server may be a cloud server, is also known as a cloud computing server or a cloud host, and is a host product in a cloud computing service system to solve the defects of difficult management and weak service extendibility existing in conventional physical hosts and VPS services (virtual private server, or VPS for short). The server may be a distributed system server, or a server combined with a blockchain.
It should be understood that the various forms of processes shown above may be used to reorder, add, or delete steps. For example, the steps disclosed in the present disclosure may be executed in parallel, sequentially, or in different orders, as long as the desired results of the technical solutions of the present disclosure can be implemented. This is not limited herein.

## Claims

1. A server (400), comprising:
a baseboard manager controller (401); and
at least one core board (200), each of the at least one core board (200) comprising:
a forced downloading switch (201) configured to set, in response to receiving a forced downloading signal from outside, an electrical signal value to be a preset value;
a system on chip (202) connected to the forced downloading switch (201), communicatively connected to a USB interface (204), and configured to perform, in response to monitoring that the electrical signal value of the forced downloading switch (201) is the preset value, fault repairing using data for repairing received from outside via the USB interface (204); and
a power source (203) supplying power to the system on chip (202) and configured to perform power control on the system on chip (202) based on a power control signal received from outside,
wherein the power source (203) is further configured to first power off, and then power on the system on chip (202) under control of the power control signal, enabling the system on chip (202) to enter a repairing mode for executing a program or codes in the data for repairing, to implement fault repairing,
wherein the at least one core board (402) is connected to the baseboard manager controller (401), and is configured to receive, in response to receiving the forced downloading signal from the baseboard manager controller (401), the data for repairing from the baseboard manager controller (401) to perform fault repairing.

2. The server (400) according to claim 1, wherein the baseboard manager controller (401) is further configured to determine, based on core board fault information received from outside, a target core board from the at least one core board (402).

3. The server (400) according to claim 2, wherein the baseboard manager controller (401) is further configured to receive the data for repairing from outside, and send the data for repairing to the target core board.

4. The server (400) according to claim 3, wherein the baseboard manager controller (401) is connected to the forced downloading switch (201) via a first connection wire, is connected to the power source (203) via a second connection wire, and is connected to the USB interface (204) via a third connection wire.

5. The server (400) according to claim 4, wherein the baseboard manager controller (401) is connected to the microcontroller unit (301) via a fourth connection wire, and is connected to the power source (304) via a fifth connection wire.

6. A server (400), comprising:
a baseboard manager controller (401); and
at least one core board (300), each of the at least one core board (200) comprising:
a microcontroller unit (301) connected to a forced downloading switch (302) and a power source (304), and configured to, in response to receiving a fault repairing instruction from outside, send a forced downloading signal to the forced downloading switch (302) and send a power control signal to the power source (304), the forced downloading switch (302) being configured to set, in response to receiving the forced downloading signal, an electrical signal value to be a preset value, the power source (304) being configured to perform power control on a connected system on chip (303) based on the power control signal; and
the system on chip (303) being communicatively connected to a USB interface (305), and being configured to perform, in response to monitoring that the electrical signal value of the forced downloading switch (302) is the preset value, fault repairing using data for repairing received from outside via the USB interface (305),
wherein the power source (304) is further configured to first power off, and then power on the system on chip (303) under control of the power control signal, enabling the system on chip (303) to enter a repairing mode for executing a program or codes in the data for repairing, to implement fault repairing,
wherein the at least one core board (402) is connected to the baseboard manager controller (401), and is configured to receive, in response to receiving the forced downloading signal from the baseboard manager controller (401), data for repairing from the baseboard manager controller (401) to perform fault repairing.

7. The server (400) according to claim 6, wherein the baseboard manager controller (401) is further configured to determine, based on core board fault information received from outside, a target core board from the at least one core board (402).

8. The server (400) according to claim 7, wherein the baseboard manager controller (401) is further configured to receive data for repairing from outside, and send the data for repairing to the target core board.

9. The server (400) according to claim 8, wherein the baseboard manager controller (401) is connected to the forced downloading switch (201) via a first connection wire, is connected to the power source (203) via a second connection wire, and is connected to the USB interface (204) via a third connection wire.

10. The server (400) according to claim 9, wherein the baseboard manager controller (401) is connected to the microcontroller unit (301) via a fourth connection wire, and is connected to the power source (304) via a fifth connection wire.

## Patentansprüche

1. Server (400), umfassend:
einen Baseboard-Manager-Controller (401); und
mindestens eine Kernplatine (200), wobei jede der mindestens einen Kernplatine (200) umfasst:
einen erzwungenen Downloadschalter (201), der konfiguriert ist zum Einstellen, als Reaktion auf das Empfangen eines erzwungenen Downloadsignals von außen, eines elektrischen Signalwerts auf einen voreingestellten Wert;
ein System-on-Chip (202), das mit dem erzwungenen Downloadschalter (201) verbunden ist, kommunikativ mit einer USB-Schnittstelle (204) verbunden ist und konfiguriert ist zum Durchführen, als Reaktion auf das Überwachen, dass der elektrische Signalwert des erzwungenen Downloadschalters (201) der voreingestellte Wert ist, einer Fehlerreparatur unter Verwendung von Daten zur Reparatur, die von außen über die USB-Schnittstelle (204) empfangen werden; und
eine Stromquelle (203), die das System-on-Chip (202) mit Strom versorgt und konfiguriert ist zum Durchführen einer Leistungssteuerung an dem System-on-Chip (202) basierend auf einem Leistungssteuersignal, das von außen empfangen wird,
wobei die Stromquelle (203) ferner konfiguriert ist zum ersten Ausschalten und dann Einschalten des Systems-on-Chip (202) unter Steuerung des Leistungssteuersignals, wodurch das System-on-Chip (202) in einen Reparaturmodus zum Ausführen eines Programms oder von Codes in den Daten zur Reparatur eintritt, um eine Fehlerreparatur zu implementieren,
wobei die mindestens eine Kernplatine (402) mit dem Baseboard-Manager-Controller (401) verbunden ist und konfiguriert ist zum Empfangen, als Reaktion auf das Empfangen des erzwungenen Downloadsignals von dem Baseboard-Manager-Controller (401), der Daten zur Reparatur von dem Baseboard-Manager-Controller (401), um eine Fehlerreparatur durchzuführen.

2. Server (400) nach Anspruch 1, wobei der Baseboard-Manager-Controller (401) ferner konfiguriert ist zum Bestimmen, basierend auf Kernplatinen-Fehlerinformation, die von außen empfangen wird, einer Ziel-Kernplatine aus der mindestens einen Kernplatine (402).

3. Server (400) nach Anspruch 2, wobei der Baseboard-Manager-Controller (401) ferner konfiguriert ist zum Empfangen der Daten zur Reparatur von außen und Senden der Daten zur Reparatur an die Ziel-Kernplatine.

4. Server (400) nach Anspruch 3, wobei der Baseboard-Manager-Controller (401) mit dem erzwungenen Downloadschalter (201) über einen ersten Verbindungsdraht verbunden ist, mit der Stromquelle (203) über einen zweiten Verbindungsdraht verbunden ist und mit der USB-Schnittstelle (204) über einen dritten Verbindungsdraht verbunden ist.

5. Server (400) nach Anspruch 4, wobei der Baseboard-Manager-Controller (401) mit der Mikrocontroller-Einheit (301) über einen vierten Verbindungsdraht verbunden ist und mit der Stromquelle (304) über einen fünften Verbindungsdraht verbunden ist.

6. Server (400), umfassend:
einen Baseboard-Manager-Controller (401); und
mindestens eine Kernplatine (300), wobei jede der mindestens einen Kernplatine (200) umfasst:
eine Mikrocontroller-Einheit (301), die mit einem erzwungenen Downloadschalter (302) und einer Stromquelle (304) verbunden ist und konfiguriert ist zum, als Reaktion auf das Empfangen einer Fehlerreparaturanweisung von außen, Senden eines erzwungenen Downloadsignals an den erzwungenen Downloadschalter (302) und Senden eines Leistungssteuersignals an die Stromquelle (304), wobei der erzwungene Downloadschalter (302) konfiguriert ist zum Einstellen, als Reaktion auf das Empfangen des erzwungenen Downloadsignals, eines elektrischen Signalwerts auf einen voreingestellten Wert, wobei die Stromquelle (304) konfiguriert ist zum Durchführen einer Leistungssteuerung an einem verbundenen System-on-Chip (303) basierend auf dem Leistungssteuersignal; und
das System-on-Chip (303), das kommunikativ mit einer USB-Schnittstelle (305) verbunden ist und konfiguriert ist zum Durchführen, als Reaktion auf das Überwachen, dass der elektrische Signalwert des erzwungenen Downloadschalters (302) der voreingestellte Wert ist, einer Fehlerreparatur unter Verwendung von Daten zur Reparatur, die von außen über die USB-Schnittstelle (305) empfangen werden,
wobei die Stromquelle (304) ferner konfiguriert ist zum ersten Ausschalten und dann Einschalten des Systems-on-Chip (303) unter Steuerung des Leistungssteuersignals, wodurch das System-on-Chip (303) in einen Reparaturmodus zum Ausführen eines Programms oder von Codes in den Daten zur Reparatur eintritt, um eine Fehlerreparatur zu implementieren,
wobei die mindestens eine Kernplatine (402) mit dem Baseboard-Manager-Controller (401) verbunden ist und konfiguriert ist zum Empfangen, als Reaktion auf das Empfangen des erzwungenen Downloadsignals von dem Baseboard-Manager-Controller (401), von Daten zur Reparatur von dem Baseboard-Manager-Controller (401), um eine Fehlerreparatur durchzuführen.

7. Server (400) nach Anspruch 6, wobei der Baseboard-Manager-Controller (401) ferner konfiguriert ist zum Bestimmen, basierend auf Kernplatinen-Fehlerinformation, die von außen empfangen wird, einer Ziel-Kernplatine aus der mindestens einen Kernplatine (402).

8. Server (400) nach Anspruch 7, wobei der Baseboard-Manager-Controller (401) ferner konfiguriert ist zum Empfangen von Daten zur Reparatur von außen und Senden der Daten zur Reparatur an die Ziel-Kernplatine.

9. Server (400) nach Anspruch 8, wobei der Baseboard-Manager-Controller (401) mit dem erzwungenen Downloadschalter (201) über einen ersten Verbindungsdraht verbunden ist, mit der Stromquelle (203) über einen zweiten Verbindungsdraht verbunden ist und mit der USB-Schnittstelle (204) über einen dritten Verbindungsdraht verbunden ist.

10. Server (400) nach Anspruch 9, wobei der Baseboard-Manager-Controller (401) mit der Mikrocontroller-Einheit (301) über einen vierten Verbindungsdraht verbunden ist und mit der Stromquelle (304) über einen fünften Verbindungsdraht verbunden ist.

## Revendications

1. Serveur (400), comprenant :
un contrôleur de gestion de carte mère (401) ; et
au moins une carte centrale (200), chaque carte centrale parmi ladite au moins une carte centrale (200) comprenant :
un commutateur de téléchargement forcé (201) configuré pour définir, en réponse à la réception d'un signal de téléchargement forcé provenant de l'extérieur, une valeur de signal électrique comme étant une valeur prédéfinie ;
un système sur puce (202) connecté au commutateur de téléchargement forcé (201), connecté en communication à une interface USB (204), et configuré pour effectuer, en réponse à la surveillance du fait que la valeur de signal électrique du commutateur de téléchargement forcé (201) est la valeur prédéfinie, une réparation de défaut en utilisant des données de réparation reçues de l'extérieur via l'interface USB (204) ; et
une source d'alimentation (203) alimentant en énergie le système sur puce (202) et configurée pour effectuer une commande d'alimentation sur le système sur puce (202) sur la base d'un signal de commande d'alimentation reçu de l'extérieur,
dans lequel la source d'alimentation (203) est en outre configurée pour d'abord mettre hors tension, puis mettre sous tension le système sur puce (202) sous la commande du signal de commande d'alimentation, permettant au système sur puce (202) d'entrer dans un mode de réparation pour exécuter un programme ou des codes dans les données de réparation, afin de mettre en œuvre une réparation de défaut,
dans lequel ladite au moins une carte centrale (402) est connectée au contrôleur de gestion de carte mère (401), et est configurée pour recevoir, en réponse à la réception du signal de téléchargement forcé provenant du contrôleur de gestion de carte mère (401), les données de réparation provenant du contrôleur de gestion de carte mère (401) pour effectuer une réparation de défaut.

2. Serveur (400) selon la revendication 1, dans lequel le contrôleur de gestion de carte mère (401) est en outre configuré pour déterminer, sur la base d'informations de défaut de carte centrale reçues de l'extérieur, une carte centrale cible parmi ladite au moins une carte centrale (402).

3. Serveur (400) selon la revendication 2, dans lequel le contrôleur de gestion de carte mère (401) est en outre configuré pour recevoir les données de réparation de l'extérieur, et envoyer les données de réparation à la carte centrale cible.

4. Serveur (400) selon la revendication 3, dans lequel le contrôleur de gestion de carte mère (401) est connecté au commutateur de téléchargement forcé (201) via un premier fil de connexion, est connecté à la source d'alimentation (203) via un deuxième fil de connexion, et est connecté à l'interface USB (204) via un troisième fil de connexion.

5. Serveur (400) selon la revendication 4, dans lequel le contrôleur de gestion de carte mère (401) est connecté à l'unité de microcontrôleur (301) via un quatrième fil de connexion, et est connecté à la source d'alimentation (304) via un cinquième fil de connexion.

6. Serveur (400), comprenant :
un contrôleur de gestion de carte mère (401) ; et
au moins une carte centrale (300), chaque carte centrale parmi ladite au moins une carte centrale (200) comprenant :
une unité de microcontrôleur (301) connectée à un commutateur de téléchargement forcé (302) et à une source d'alimentation (304), et configurée pour, en réponse à la réception d'une instruction de réparation de défaut provenant de l'extérieur, envoyer un signal de téléchargement forcé au commutateur de téléchargement forcé (302) et envoyer un signal de commande d'alimentation à la source d'alimentation (304), le commutateur de téléchargement forcé (302) étant configuré pour définir, en réponse à la réception du signal de téléchargement forcé, une valeur de signal électrique comme étant une valeur prédéfinie, la source d'alimentation (304) étant configurée pour effectuer une commande d'alimentation sur un système sur puce (303) connecté sur la base du signal de commande d'alimentation ; et
le système sur puce (303) étant connecté en communication à une interface USB (305), et étant configuré pour effectuer, en réponse à la surveillance du fait que la valeur de signal électrique du commutateur de téléchargement forcé (302) est la valeur prédéfinie, une réparation de défaut en utilisant des données de réparation reçues de l'extérieur via l'interface USB (305),
dans lequel la source d'alimentation (304) est en outre configurée pour d'abord mettre hors tension, puis mettre sous tension le système sur puce (303) sous la commande du signal de commande d'alimentation, permettant au système sur puce (303) d'entrer dans un mode de réparation pour exécuter un programme ou des codes dans les données de réparation, afin de mettre en œuvre une réparation de défaut,
dans lequel ladite au moins une carte centrale (402) est connectée au contrôleur de gestion de carte mère (401), et est configurée pour recevoir, en réponse à la réception du signal de téléchargement forcé provenant du contrôleur de gestion de carte mère (401), des données de réparation provenant du contrôleur de gestion de carte mère (401) pour effectuer une réparation de défaut.

7. Serveur (400) selon la revendication 6, dans lequel le contrôleur de gestion de carte mère (401) est en outre configuré pour déterminer, sur la base d'informations de défaut de carte centrale reçues de l'extérieur, une carte centrale cible parmi ladite au moins une carte centrale (402).

8. Serveur (400) selon la revendication 7, dans lequel le contrôleur de gestion de carte mère (401) est en outre configuré pour recevoir des données de réparation de l'extérieur, et envoyer les données de réparation à la carte centrale cible.

9. Serveur (400) selon la revendication 8, dans lequel le contrôleur de gestion de carte mère (401) est connecté au commutateur de téléchargement forcé (201) via un premier fil de connexion, est connecté à la source d'alimentation (203) via un deuxième fil de connexion, et est connecté à l'interface USB (204) via un troisième fil de connexion.

10. Serveur (400) selon la revendication 9, dans lequel le contrôleur de gestion de carte mère (401) est connecté à l'unité de microcontrôleur (301) via un quatrième fil de connexion, et est connecté à la source d'alimentation (304) via un cinquième fil de connexion.
